# EUROPÄISCHE PATENTSCHRIFT

(11) **EP 2 855 082 B1**
(45) Veröffentlichungstag und Bekanntmachung des Hinweises auf die Patenterteilung: **20.07.2016**
(21) Anmeldenummer: 13725380.3
(22) Anmeldetag: 28.05.2013
(51) Int. Cl.: B23Q 1/01, B23Q 1/48, B23C 1/00, B24B 27/00, B24B 41/02, B24B 3/24, B24B 3/02

(54) **VORRICHTUNG ZUM SCHÄRFEN VON WERKZEUGEN MIT SCHNEIDEN, WIE BEISPIELSWEISE BOHRER, FRÄSER ODER DERGLEICHEN**
DEVICE FOR SHARPENING TOOLS WITH CUTTERS, SUCH AS FOR EXAMPLE DRILLS, MILLING TOOLS OR THE LIKE
DISPOSITIF POUR AIGUISER DES OUTILS À TAILLANTS COMME, PAR EXEMPLE, DES FORETS, FRAISES OU SIMILAIRE

(30) Priorität: 30.05.2012 DE 102012010689
(43) Veröffentlichungstag der Anmeldung: 08.04.2015
(73) Patentinhaber: VOLLMER WERKE Maschinenfabrik GmbH, 88400 Biberach/Riss (DE)
(72) Erfinder: BARENSTEINER, Ulrich, 88299 Leutkirch (DE); BOTT, Joachim, 88454 Hochdorf (DE); GERST, Manuel, 88400 Biberach (DE); SAEGMUELLER, Manfred, 88444 Ummendorf (DE)
(74) Vertreter: Thum, Bernhard
(86) Internationale Anmeldenummer: PCT/EP2013/060951
(87) Internationale Veröffentlichungsnummer: WO 2013/178625

(56) Entgegenhaltungen:
- WO-A1-02/066193
- DE-A1- 10 012 445
- DE-A1- 10 213 778
- DE-A1- 10 259 215
- DE-A1-102005 011 306

## Beschreibung

Die vorliegende Erfindung betrifft eine Vorrichtung zum Schärfen von Werkzeugen mit Schneiden für die spanabhebende oder schneidende Bearbeitung, wie beispielsweise Bohrer, Fräser oder dergleichen. Eine derartige Vorrichtung ist aus der DE 10 2005 011 306 A1 bekannt, welche die Basis für den Oberbegriff des Anspruch 1 bildet.

Dem Schärfen von Werkzeugen, die für unterschiedliche Bearbeitungsaufgaben eingesetzt werden, kommt immer größere Bedeutung zu. Aufgrund der zunehmenden Komplexität der Geometrie von Werkzeugen, die beispielsweise die spanabhebende Bearbeitung mehrerer Flächen eines Werkstücks aus harten Materialien in einem einzigen Arbeitsschritt ermöglicht, führt zu erheblichen Anschaffungskosten derartiger Werkzeuge. Da derartige Werkzeuge möglichst lange genutzt werden sollen, ist es erforderlich, neben dem erstmaligen Schärfen bei der Herstellung der Werkzeuge deren Schneiden auch regelmäßig nachzuschärfen, um eine maßhaltige Bearbeitung der Werkstücke zu gewährleisten. Bei solchen Bearbeitungsaufgaben zum erstmaligen Schärfen und zum Nachschärfen von Werkzeugen, die bei der Schärfbearbeitung als "Werkstücke" bearbeitet werden, kommt dem Schleifen eine tragende Rolle zu. Allerdings kommen auch zunehmend andere Bearbeitungsverfahren bei der Schärfbearbeitung zum Einsatz, wie beispielsweise die Erodierbearbeitung oder die Laserbearbeitung.

Aus dem Stand der Technik ist insbesondere im Bereich der Schleifmaschinen eine Vielzahl von Lösungen bekannt, die den Anforderungen des Schärfens von Werkzeugen mehr oder weniger stark gewachsen sind.

So zeigt beispielsweise das Dokument DE 198 44 242 C2 eine Universalschleifmaschine, bei der das Werkstück auf einem Schlitten in schräger Ausrichtung angebracht und eine Bearbeitungseinheit an einer turmartigen Führung geführt ist. Eine ähnliche Lösung zeigen das Dokument CH 698 920 B1 sowie das Dokument EP 0 023 876 A1.

Das Dokument DE 201 04 030 U1 zeigt eine Schleifmaschine in Tischbauweise, bei der gleichsam die Bearbeitungseinheit an einem Turm angebracht und in vertikaler Richtung geführt ist.

Das Dokument CH 692 450 A5 zeigt eine Schleifmaschine, bei der die Schleifwerkzeuge an einer Bearbeitungseinheit angebracht sind, die über ein Portal relativ zu einer Maschinenbasis geführt ist. Diese Schleifmaschine ist relativ groß bauend ausgeführt und erfordert eine verhältnismäßig große Stellfläche.

Eine Lösung, die ebenfalls der Portalbauweise zuzuordnen ist, ist in dem Dokument DE 42 42 906 A1 gezeigt. Wenngleich diese Schleifmaschine kleiner baut, als die vorstehend beschriebene Schleifmaschine, so ist deren Aufbau verhältnismäßig kompliziert und erlaubt nur wenige Modifikationen zur Anpassung an unterschiedliche Bearbeitungssituationen.

Das Dokument DE 41 35 823 A1 offenbart eine Werkzeugschleifmaschine mit einem Maschinenständer, welcher in seinem oberen Bereich eine im Wesentlichen T-förmige Querschnittsfläche hat. Diese T-förmige Querschnittsfläche wird durch einen Längsschenkel und einen Querschenkel gebildet. An einer vertikalen Seitenfläche des Längsschenkels bzw. des quaderförmigen Teils ist eine vertikale Führung angeordnet, auf der ein Unterschlitten vertikal, d.h. in X-Richtung, verfahrbar ist. Am Unterschlitten ist eine horizontale Führung angeordnet, auf der ein Oberschlitten horizontal, d.h. in Z-Richtung, verfahrbar ist. Der Oberschlitten trägt einen Werkstückspindelkopf mit einer Werkstückspindel, die um eine zur X-Achse parallele Drehachse drehbar ist. Auf der oberen Stirnfläche des Querschenkels ist eine horizontale Führung ausgebildet, auf der ein Schleifkopfschlitten in Y-Richtung verschiebbar gelagert ist. Auf dem Schleifkopfschlitten ist ein Schleifkopfträger angeordnet, der den Schleifkopf trägt. Im Schleifkopf ist eine Schleifspindel drehbar gelagert, an deren freiem Ende ein Schleifwerkzeug anbringbar ist. Der Schleifkopf ist über einen Arm um eine Schwenkachse schwenkbar an dem Schleifkopfträger angeordnet.

Das Dokument US 8 066 548 B1 beschreibt einen würfelförmigen Maschinenrahmen. Eine Seite des Hauptrahmens sind Schienen vorgesehen, entlang denen ein Träger in X-Richtung verlagerbar ist. Der Träger wiederum weist Schienen auf, über die ein weiterer Schlitten oder Träger in Y-Richtung verfahren werden kann. Eine der Seiten des Hauptrahmens und der Träger weisen jeweils Öffnungen und auf, die eine Freibewegung einer Spindel in X- und Y-Richtung zulassen. An der Seite des Rahmens sind Schienen vorgesehen, entlang denen der Träger in Z-Richtung verlagerbar ist. Der Träger und eine der Seiten des Hauptrahmens weisen Öffnungen auf, durch die sich eine drehbare Anordnung erstreckt, die um eine Achse rotieren kann.

Die vorstehend beschriebenen Schleifmaschinen aus dem Stand der Technik sind aufgrund ihrer Anzahl und Anordnung der Bearbeitungsachsen in der Regel auch komplexen Bearbeitungsaufgaben gewachsen, besitzen aber allesamt einen verhältnismäßig komplexen Aufbau, der relativ viel Bauraum und Stellfläche erfordert. Darüber hinaus sind diese Schleifmaschinen - sofern überhaupt möglich - nur in stark eingeschränktem Umfang an verschiedene Bearbeitungssituationen oder kundenspezifische Anforderungen anpassbar. So hat sich gezeigt, dass nicht immer Bedarf für Universalmaschinen besteht, die für vielfältige Bearbeitungsaufgaben einsetzbar sind. Stattdessen sind individuell auf bestimmte Bearbeitungsaufgaben angepasste Maschinen gewünscht. Es ist daher häufig nicht erforderlich, eine Universalschleifmaschine bereitzustellen, wenn ein wesentlicher Teil der mit dieser möglichen Bearbeitungssituationen beim Nutzer überhaupt nicht benötigt wird und zum Einsatz kommt. Stattdessen werden speziell auf die beim Nutzer anfallenden Bearbeitungssituationen abgestimmte Bearbeitungsmaschinen, insbesondere Schleifmaschinen, auch aus Gründen einer günstigeren Anschaffung bevorzugt.

Es ist Aufgabe der vorliegenden Erfindung, eine Vorrichtung der eingangs bezeichneten Art bereitzustellen, die bei einfachem und kompaktem Aufbau eine spezifische Anpassung an die jeweiligen Bearbeitungssituationen ermöglicht.

Diese Aufgabe wird durch eine Vorrichtung zum Schärfen und nach Schärfen von Werkzeugen mit Schneiden für die schneidende oder spanabhebende Bearbeitung, wie beispielsweise Bohrer, Fräser oder dergleichen mit den Merkmalen gemäß Patentanspruch 1 gelöst.

Die Vorrichtung gemäß der vorliegenden Erfindung hat den Vorteil eines äußerst kompakten Aufbaus, bei dem sämtliche Komponenten an einem einzigen monolithischen Maschinenblock angeordnet sind. Komplexe Strukturen, wie etwa die Kombination eines Maschinentisches mit einem die Bearbeitungseinheit tragenden Turm oder Portal, haben demgegenüber den Nachteil, dass sie eine erheblich größere Stellfläche benötigen und einen aufwändigeren Aufbau besitzen. Darüber hinaus bietet die erfindungsgemäße Vorrichtung den Vorteil eines modularen Aufbaus. Je nach Bedarf bzw. je nach gewünschtem Einsatzfall lassen sich einzelne Komponenten nachrüsten oder anwendungsspezifisch ausgestalten. So ist es beispielsweise möglich, sowohl die Bearbeitungseinheit als auch die Werkstückträgeranordnung nach Bedarf mehr oder weniger komplex auszugestalten, wie im Folgenden bei der Beschreibung der einzelnen Ausführungsformen im Detail ersichtlich wird. Diese Anpassung an die jeweiligen Anwendungsfälle kann durch geringfügige Eingriffe an der erfindungsgemäßen Vorrichtung vorgenommen werden, wobei das Grundkonzept unverändert bleibt. Dieser Vorteil ist insbesondere damit zu begründen, dass sämtliche Komponenten an dem einzigen monolithischen Maschinenblock angeordnet und geführt sind.
Ein weiterer Vorteil der vorliegenden Erfindung besteht in der guten Zugänglichkeit der verschiedenen Komponenten, insbesondere der Bearbeitungseinheit und der Werkstückträgeranordnung. Dies erlaubt eine besonders vorteilhafte Einbindung der Vorrichtung gemäß der vorliegenden Erfindung in eine automatisierte Fertigung, weil sowohl Werkzeuge also Werkstücke einfach zugeführt oder entnommen werden können.

Im Folgenden werden einzelne Weiterbildungen der Erfindung im Detail mit Bezug auf die abhängigen Ansprüche erläutert.

Gemäß einer nicht erfindungsgemäßen Weiterbildung der vorliegenden Erfindung kann vorgesehen sein, dass der Träger eine weitere Funktionsfläche aufweist, an der die dritte Linearführung zum Führen der Bearbeitungseinheit relativ zum Träger entlang einer dritten Führungsachse angebracht ist. In einem erfindungsgemäßen Ausführungsbeispiel ist die dritte Linearführung einem Schlitten zugeordnet, der die Werkstückträgeranordnung aufweist. Wesentlich ist, dass durch die drei Linearführungen mit ihren Führungsachsen ein Koordinatensystem aus drei paarweise zueinander schräg verlaufenden Achsen aufgespannt wird. Die Erfindung sieht vor, dass diese Führungsachsen orthogonal zueinander angeordnet sind.

Erfindungsgemäß sind die beiden Funktionsflächen des Maschinenblocks im Wesentlichen zueinander senkrecht angeordnet. Dabei kann erfindungsgemäß vorgesehen sein, dass der monolithische Maschinenblock im Wesentlichen quaderförmig ausgebildet ist, wobei die erste Funktionsfläche größer ist als die zweite Funktionsfläche. So kann die erste Linearführung der Werkstückträgeranordnung an einer großen Fläche des quaderförmigen Maschinenblocks angebracht sein, um so große Verstellwege für das Werkstück, das heißt das zu schärfende Werkzeug, zu gewährleisten. Dadurch lassen sich auch verhältnismäßig lange Schaftwerkzeuge zuverlässig bearbeiten. Bei einer derartigen Ausgestaltung des monolithischen Maschinenblocks sieht eine Weiterbildung der Erfindung vor, dass die erste Linearführung der Werkstückträgeranordnung im Wesentlichen über die gesamte Länge der ersten Funktionsfläche ausgebildet ist. Auf diese Weise können größtmögliche Verstellwege erhalten werden.

Erfindungsgemäß ist es aber nicht erforderlich, dass die beiden Funktionsflächen des monolithischen Maschinenblocks vertikal verlaufen. Alternativ kann vorgesehen sein, dass wenigstens eine der beiden Funktionsflächen des Maschinenblocks zu der Vertikalen geneigt ist, beispielsweise in einem Winkel von wenigstens 10°. Dabei ist es möglich, den gesamten Maschinenblock mit einer derart schräg gestellten Funktionsfläche auszuführen, beispielsweise keilförmig, oder am Maschinenblock nur einzelne Flächenabschnitte mit einer entsprechenden Schräge auszuführen, beispielsweise einen Funktionsflächenabschnitt in einer Ausnehmung oder an einem Vorsprung des monolithischen Maschinenblocks. Dementsprechend sind dann auch die Führungsachsen geneigt, wie oben bereits allgemein angedeutet.

Erfindungsgemäß ist vorgesehen, dass der Maschinenblock wenigstens einen Vorsprung mit einer horizontalen Fläche aufweist, wobei die zweite Line-arführungen teilweise im Bereich dieses Vorsprungs auf der horizontalen Fläche angeordnet ist. Alternativ ist es möglich, auch eine zur Horizontalen, beispielsweise um wenigstens 10°, geneigte Fläche vorzusehen, und an dieser die betreffende Linearführung anzuordnen.

Insbesondere kann im Zusammenhang mit der Anordnung der Linearführungen vorgesehen sein, dass die Werkstückträgeranordnung an einem entlang der ersten Linearführung geführten ersten Schlitten angebracht ist. Ferner kann die Werkstückträgeranordnung relativ zu diesem ersten Schlitten um die erste Rotationsachse verschwenkbar sein. Wie vorstehend bereits angedeutet, kann an diesem Schlitten auch noch eine weitere Linearführung vorgesehen sein, die einen zweiten Schlitten führt. So lässt sich die Werkstückträgeranordnung an einer Kreuzschlittenanordnung anbringen. Die modulare Anbringung der Werkstückträgeranordnung an einem separaten Schlitten, macht es darüber hinaus möglich, je nach Bedarf unterschiedlich ausgebildete Werkstückträgeranordnungen an dem Schlitten zu verwenden und diese bedarfsweise auszutauschen. Mit anderen Worten lässt sich das Modul "Werkstückträgeranordnung" bei dieser Ausführungsvariante also je nach Bedarf einfach auswechseln.

Eine Weiterbildung der Erfindung sieht vor, dass die Werkstückträgeranordnung an einem Schwenkarm oder Schwenkteller angebracht ist, der relativ zum ersten Schlitten um dier dritte Rotationsachse verschwenkbar ist. Unter Berücksichtigung der Länge des Schwenkarms und Positionierung der dritten Rotationsachse relativ zum Schwenkarm und der darauf angeordneten Werkstückträgeranordnung lässt sich die Positionierung des Werkstücks beliebig einstellen. Der Schwenkteller erlaubt beispielsweise eine rein rotatorische Verstellung der Werkstückträgeranordnung um eine Rotationsachse.

Hinsichtlich der Anbringung der Bearbeitungseinheit kann bei einer nicht erfindungsgemäßen Ausführung vorgesehen sein, dass der Träger von einem weiteren monolithischen Block gebildet ist, an dem die dritte Linearführung angebracht ist. Auch der Träger kann somit als Schnittstelle zur Anbringung des Moduls "Bearbeitungseinheit" dienen. Am Träger kann hierfür wiederum eine vertikale, horizontale oder zur Vertikalen oder Horizontalen schräg verlaufende Funktionsfläche vorgesehen sein. Die Neigung der schräg verlaufenden Fläche beträgt beispielsweise wenigstens 10°.

Erfindungsgemäß ist vorgesehen, dass der Träger wenigstens eine Gabel zur Aufnahme wenigstens einer Schwinge aufweist, an der die Bearbeitungseinheit zumindest um die zweite Rotationsachse verschwenkbar gelagert ist. Die zweite Rotationsachse kann dabei im Wesentlichen in vertikaler Richtung verlaufen.

Bei der Vorrichtung mit wenigstens einer verschwenkbaren Schwinge sind mehrere rotatorisch angetriebene Spindeln zum Antreiben verschiedener Werkzeuger vorgesehen. Beispielsweise können zwei gleichgerichtete oder entgegengesetzt ausgerichtete Spindeln mit im Wesentlichen parallelen Rotationsachsen vorgesehen werden. Diese beiden Spindeln können jeweils separat über separate Antriebsmotoren angetrieben werden. Es ist aber auch möglich, lediglich einen Antriebsmotor vorzusehen und eine Spindel oder beide Spindeln jeweils über ein zwischengestaltetes Getriebe über diesen Antriebsmotor anzutreiben. Der Begriff "Getriebe" ist in diesem Zusammenhang breit zu verstehen. Es bieten sich insbesondere Riementriebe an. Dabei können die Antriebsriemen gestaffelt und platzsparend angeordnet werden.

Eine Weiterbildung der Erfindung sieht vor, dass an der wenigstens einen Gabel eine Mehrzahl von Schwingen relativ zueinander und relativ zur jeweiligen Gabel um die zweite Rotationsachse verschwenkbar gelagert ist. Dabei kann vorgesehen sein, dass zwei zueinander benachbarte Schwingen vorzugsweise über einen Gelenkabschnitt relativ zueinander gelagert sind. Der Gelenkabschnitt kann ein Drehgelenk oder anderweitiges Schwenkgelenk mit einem oder mehreren Freiheitsgraden sein. Bei einer einfachen Ausführungsvariante liegt der Drehpunkt des als Drehgelenk ausgebildeten Gelenkabschnitts auf oder nahe der zweiten Rotationsachse.

Eine Weiterbildung der Erfindung sieht vor, dass die Werkstückträgeranordnung eine erste Rotationsspindel aufweist, mit der das Werkstück um eine Werkstücklängsachse drehbar ist. Gerade bei der Bearbeitung von Schaftwerkzeugen, wie Bohrer, Fräser oder dergleichen müssen diese während der Bearbeitung um ihre Längsachse gedreht werden, was durch die erste Rotationsspindel der Werkstückträgeranordnung ermöglicht wird.

In einem nicht erfindungsgemäßen Ausführungsbeispiel kann vorgesehen sein, dass die Bearbeitungseinheit auf einem auf der dritten Linearführung geführten zweiten Schlitten angebracht ist. Dabei ist es möglich, dass die Bearbeitungseinheit relativ zu dem zweiten Schlitten um die zweite Rotationsachse verschwenkbar ist. Diese Verschwenkbarkeit erlaubt es, das Bearbeitungswerkzeug relativ zum Werkstück in unterschiedliche Winkel einzustellen, um so auch komplexe Geometrien des Werkstücks adäquat bearbeiten zu können.

Je nach Anwendungsfall kann erfindungsgemäß vorgesehen sein, dass die Bearbeitungseinheit wenigstens eine rotatorisch antreibbare Schleifscheibe oder/und wenigstens ein Erodierwerkzeug, vorzugsweise eine rotatorisch antreibbare Erodierscheibe, oder/und wenigstens einen Laserkopf oder/und wenigstens einen Messtaster aufweist. Insbesondere für die Anwendung beim Schleifen oder Erodieren sieht eine Weiterbildung der vorliegenden Erfindung vor, dass die Bearbeitungseinheit wenigstens eine Rotationsspindel zum Drehantreiben eines dieser zugeordneten Werkzeugs aufweist.

Um einer Vielzahl von Bearbeitungssituationen gerecht zu werden, sieht ein nicht erfindungsgemäßes Ausführungs beispiel vor, dass die Bearbeitungseinheit eine Revolveranordnung aufweist, an der wenigstens zwei Bearbeitungswerkzeuge oder wenigstens ein Bearbeitungswerkzeug und wenigstens ein Messtaster angeordnet sind, wobei ein zur Bearbeitung einzusetzendes Werkzeug oder ein zu nutzender Messtaster durch Drehung der Bearbeitungseinheit um die zweite Rotationsachse in eine Aktivstellung verlagerbar ist. Dabei kann vorgesehen sein, dass jedem Bearbeitungswerkzeug eine Rotationsspindel zugeordnet ist. Wie vorstehend für die Ausführungsvariante mit Schwinge erläutert, können jedoch auch bei dieser Ausführungsvariante einzelne Bearbeitungswerkzeuge durch einen gemeinsamen Antrieb angetrieben werden.

Sämtliche Führungen und Drehachsen der erfindungsgemäßen Vorrichtung sind vorzugsweise separat oder kombiniert motorisch angetrieben und in üblicher Weise numerisch exakt ansteuerbar und positionierbar.

Die Erfindung wird im Folgenden beispielhaft anhand der beiliegenden Figuren erläutert. Es stellen dar:
- Fig. 1: eine räumliche Ansicht einer ersten Ausführungsform einer nicht erfindungsgemäßen Vorrichtung;
- Fig. 2: eine Vorderansicht der nicht erfindungsgemäßen Vorrichtung gemäß der ersten Ausführungsform;
- Fig. 3: eine Seitenansicht der nicht erfindungsgemäßen Vorrichtung gemäß der ersten Ausführungsform von rechts, und
- Fig. 4: eine Draufsicht auf die nicht erfindungsgemäße Vorrichtung gemäß der ersten Ausführungsform,
- Fig. 5: eine räumliche Ansicht einer zweiten Ausführungsform der nicht erfindungsgemäßen Vorrichtung,
- Fig. 6: eine Vorderansicht der nicht erfindungsgemäßen Vorrichtung gemäß der zweiten Ausführungsform,
- Fig. 7a: eine räumliche Ansicht einer Ausführungsform der erfindungsgemäßen Vorrichtung,
- Fig. 7b: eine räumliche Ansicht einer gegenüber Figur 7a abgewandelten Ausführungsform mit zusätzlich drehbarer Werkstückträgeranordnung,
- Fig. 7c: eine räumliche Detailansicht von Figur 7b,
- Fig. 8: eine räumliche Ansicht einer zweiten Ausführungsform der erfindungsgemäßen Vorrichtung,
- Fig. 9: eine Seitenansicht einer dritten Ausführungsform der erfindungsgemäßen Vorrichtung,
- Fig. 10: eine räumliche Detailansicht der Schwinge und Bearbeitungseinheit der dritten Ausfuhrungsform der erfindungsgemäßen Vorrichtung,
- Fig. 11 bis 14: verschiedene Ansichten zu Ausführungsmöglichkeiten der Schwinge gemäß der vorliegenden Erfindung, und
- Fig. 15: eine räumliche Ansicht einer weiteren Ausführungsform der erfindungsgemäßen Vorrichtung.

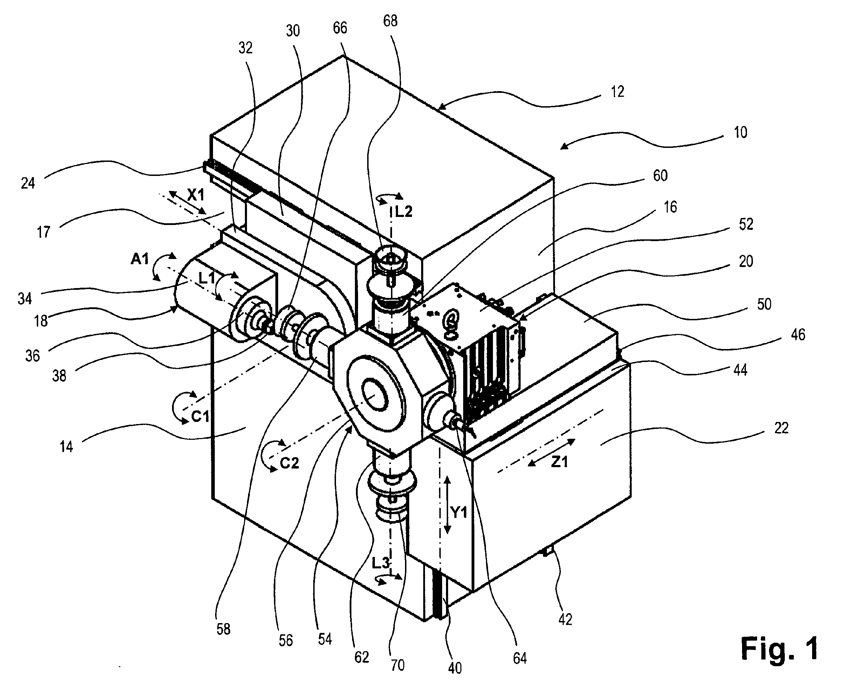

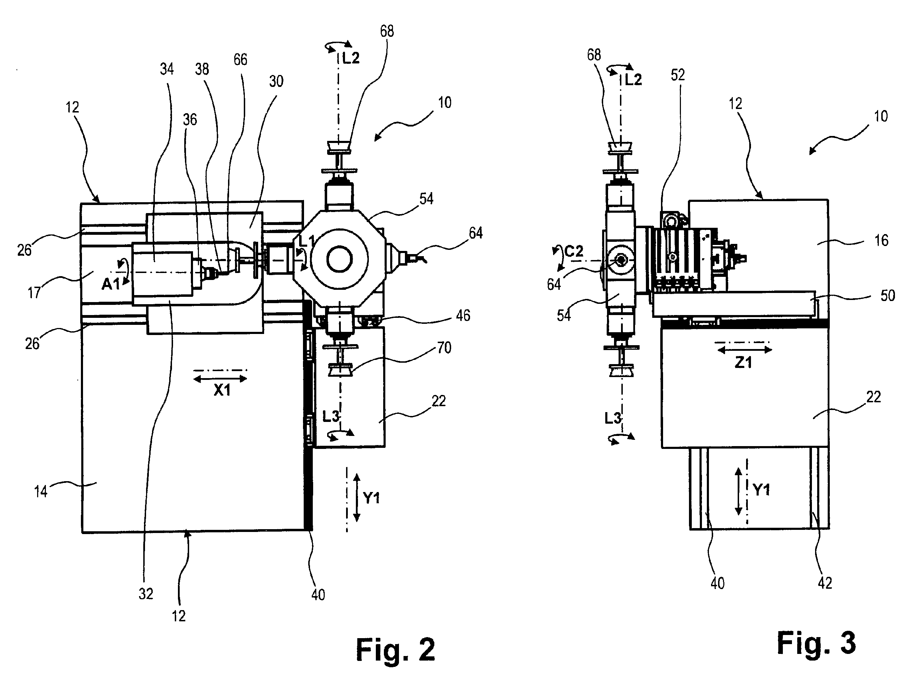

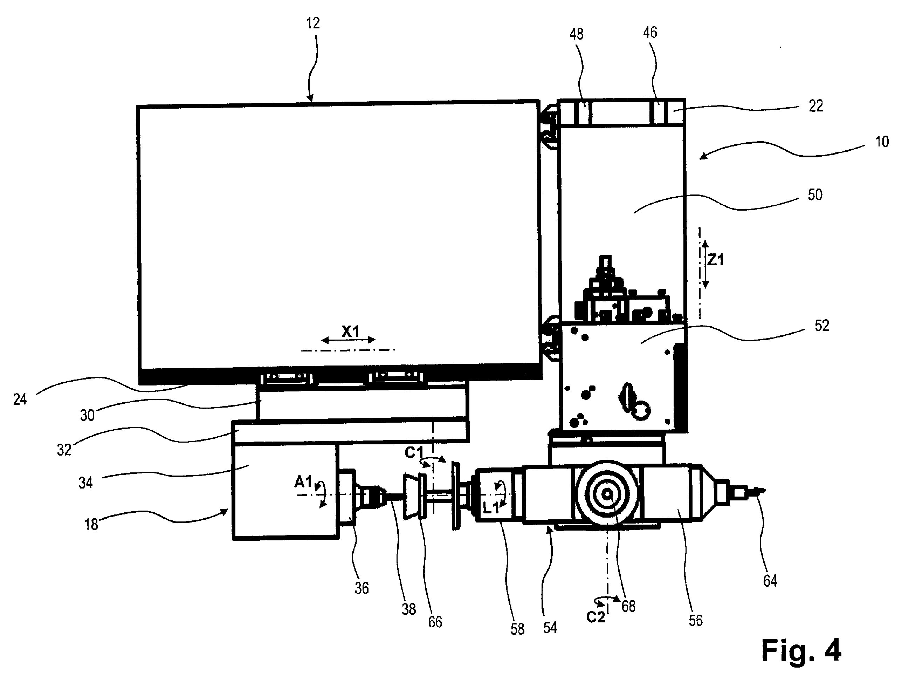

Die in den Figuren 1 bis 4 gezeigte nicht erfindungsgemäße Vorrichtung zum Schärfen von Werkzeugen mit Schneiden für die spanabhebende Bearbeitung, wie beispielsweise Bohrer, Fräser oder dergleichen, ist allgemein mit 10 bezeichnet. Sie umfasst einen monolithischen Maschinenblock 12, der im Wesentlichen quaderförmig ausgebildet ist. Der Maschinenblock 12 weist eine erste Funktionsfläche 14 auf, die von seiner großflächigen Vorderseite gebildet ist, und weist ferner eine hierzu im Wesentlichen senkrecht stehende weniger breite zweite Funktionsfläche 16 auf, die von einer Seitenfläche des Quaders gebildet ist. An der ersten Funktionsfläche 14 des Maschinenblocks 12 sind eine Ausnehmung 17 und davor eine verlagerbare Werkstückträgeranordnung 18 angebracht. Ferner zeigen die Figuren 1 bis 4, dass an der zweiten Funktionsfläche 16 eine Bearbeitungseinheit 20 über einen monolithischen quaderförmigen Träger 22 an dem Maschinenblock 12 verlagerbar angebracht ist.

Zur Anbringung der Werkstückträgeranordnung 18 ist an dem Maschinenblock 12 eine Linearführung mit zwei Führungsschienen 24, 26 vorgesehen, auf der ein Schlitten 30 in Richtung einer ersten Führungsachse X1 verlagerbar geführt ist. Auf dem Schlitten 30 ist eine um eine Rotationsachse C1 verschwenkbare Schwenkplatte 32 vorgesehen. Die Schwenkplatte 32 trägt eine Spindelanordnung 34 mit einer Werkstückaufnahme 36. Darin ist ein Werkstück 38 eingespannt. Über die Spindelanordnung 34 ist das Werkstück 38 um eine Bearbeitungsachse A1 drehbar.

An der seitlichen Funktionsfläche 16 des Maschinenblocks 12 sind wiederum zwei Führungsschienen 40, 42 angeordnet. Auf diesen ist der Träger 22 entlang einer Führungsachse Y1 vertikal verlagerbar. Auf dem Träger 22 ist auf seiner im Wesentlichen horizontalen Oberseite 44 über zwei Führungsschienen 46, 48 ein weiterer Schlitten 50 in Richtung einer Führungsachse Z1 verlagerbar geführt. Auf diesem Schlitten 50 ist die Bearbeitungseinheit 20 angeordnet. Diese weist eine Basis 52 mit einer integrierten Drehspindel auf, an der ein Revolverkopf 54 angeordnet ist. Der Revolverkopf 54 ist um eine Drehachse C2 drehbar.

Der Revolverkopf 54 ist mit einem achteckigen Drehkörper 56 versehen, wobei an vier seiner Stirnflächen drei verschiedene Bearbeitungsspindeln 58, 60, 62 sowie ein Messtaster 64 angebracht sind. Jede der Bearbeitungsspindeln 58, 60, 62 weist verschiedene Werkzeuge auf, wie beispielsweise eine Schleifscheibe 66 an der Bearbeitungsspindel 58, eine Erodierscheibe 68 an der Bearbeitungsspindel 60 und eine weitere Schleifscheibe 70 an der Bearbeitungsspindel 62. Jede Bearbeitungsspindel 58, 60, 62 ermöglicht eine Drehung des jeweiligen Werkzeugs um eine zugeordnete Drehachse L1, L2, L3. Die Bearbeitungsspindel 58 befindet sich in der gezeigten Darstellung gemäß Figur 1 in einer Aktivposition, in der sie eine Bearbeitung des Werkstücks 38 ermöglicht. Die beiden anderen Bearbeitungsspindeln 60, 62, sowie der Messtaster 64 sind in einer Passivstellung und können durch geeignete Drehung des Revolverkopfs 54 um seine Achse C2 in eine bearbeitungsaktive Aktivstellung gebracht werden.

Die einzelnen Bearbeitungsspindeln 58, 60, 62 können bei Bedarf abmontiert und durch andere Bearbeitungswerkzeuge ersetzt werden, beispielsweise durch andersartige Schleifscheiben oder Erodierscheiben mit andersartiger Geometrie, oder durch einen Laserkopf zur Laserbearbeitung des Werkstücks 38. Auch lässt sich der gesamte Revolver 54 abnehmen und durch eine andersartige Anordnung mit einer einzigen Spindel, eine andere Mehrfach-Spindelanordnung oder eine andere Werkzeug- bzw. Messtasteranordnung ersetzen.

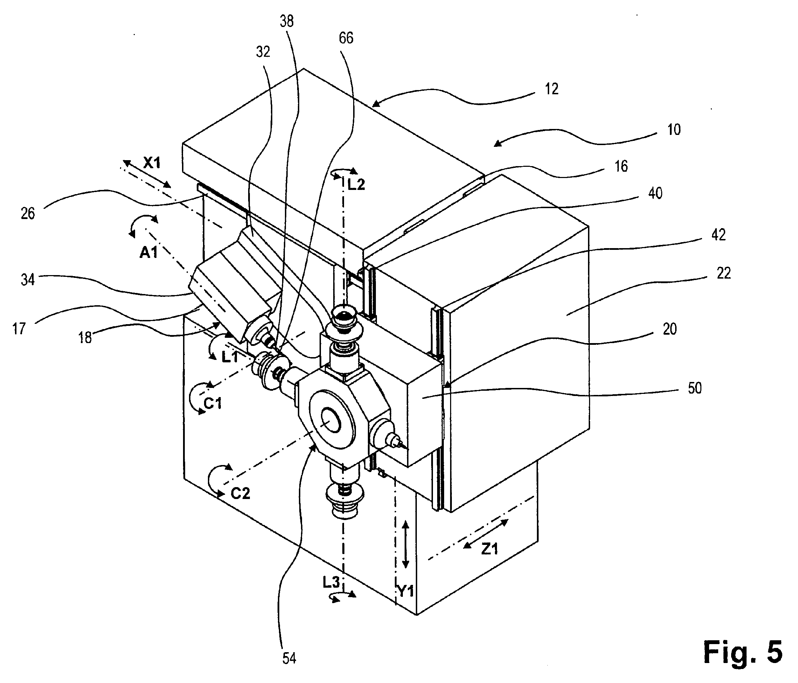

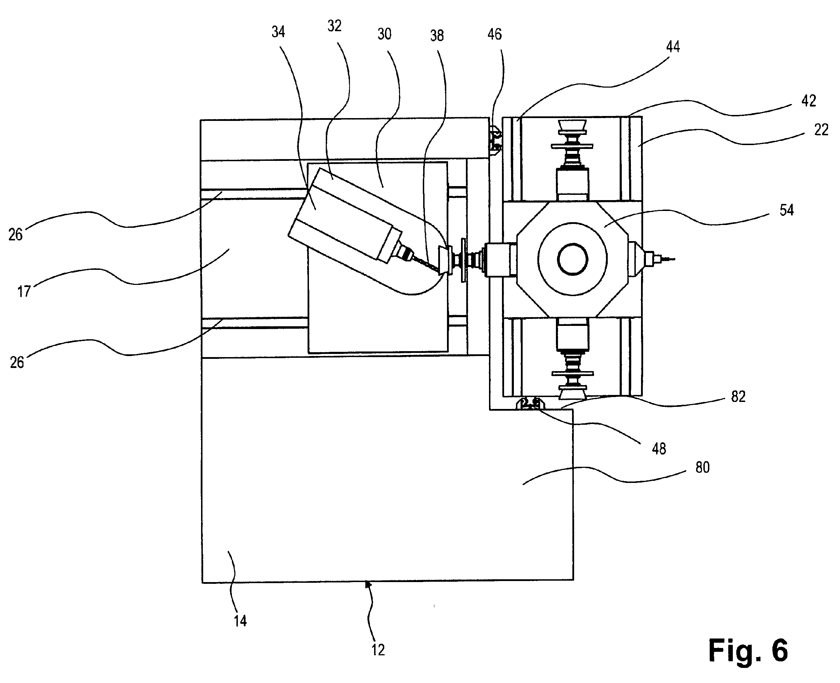

Figuren 5 und 6 zeigen eine zweite Ausführungsform der nicht erfindungsgemäßen Vorrichtung. Zur Beschreibung werden für gleichartige oder gleichwirkende Komponenten dieselben Bezugszeichen verwendet, wie bei der Beschreibung der ersten Ausführungsform gemäß den Figuren 1-4.

In den Figuren 5 und 6 erkennt man, dass der Maschinenblock 12 an seinem in Figur 6 rechten Bereich einen integral angeformten Vorsprung 80 aufweist, der mit einer im Wesentlichen horizontal verlaufenden Funktionsfläche 82 ausgebildet ist. An dieser horizontalen Funktionsfläche 82 ist eine Führungsschiene 48 angebracht. Die zugeordnete zweite Führungsschiene 46 ist an der vertikal verlaufenden Funktionsfläche 16 angebracht. Über die beiden Führungsschienen 46 und 48 lässt sich der Träger 22 in horizontaler Richtung relativ zum Maschinenblock 12 verlagern. Diese Anordnung hat den Vorteil, dass die auf dem Träger 22 einwirkende Gewichtskraft über die auf der horizontalen Funktionsfläche 82 angeordnete Führungsschiene 48 auf den Maschinenblock 12 übertragen werden kann.

Ferner erkennt man, dass der Revolverkopf 54 bei dieser Ausführungsform auf einem Schlitten 50 um die Drehachse C2 verschwenkbar angebracht ist. Der Schlitten 50 ist in vertikaler Richtung über die beiden Führungsschienen 40,42 relativ zum Träger 22 und damit auch relativ zum Maschinenblock 12 entlang der Achse Y1 verlagerbar.

Darüber hinaus erkennt man in den Figuren 5 und 6 auch die Verschwenkung der Schwenkplatte 32 um die Schwenkachse C1 relativ zum Schlitten 30. Die Figuren 5 und 6 zeigen dabei eine Bearbeitungssituation, bei der die Schleifscheibe 66 schräg von oben an dem Werkstück 38 angreift.

Es sei angemerkt, dass auch die zweite Ausführungsform gemäß den Figuren 5 und 6 eine Ausnehmung 17 aufweist, in der der Schlitten 30 aufgenommen ist. Dementsprechend sind die zugehörigen Linearführungen 24 und 26 bei dieser Ausführungsvariante in dieser Ausnehmung 17 angeordnet und gegenüber der Vorderseite des Maschinenblocks 12 zurückgesetzt.

Die Funktionsweise der Ausführungsform gemäß den Figuren 5 und 6 gleicht der Funktionsweise der ersten Ausführungsform gemäß den Figuren 1 bis 4.

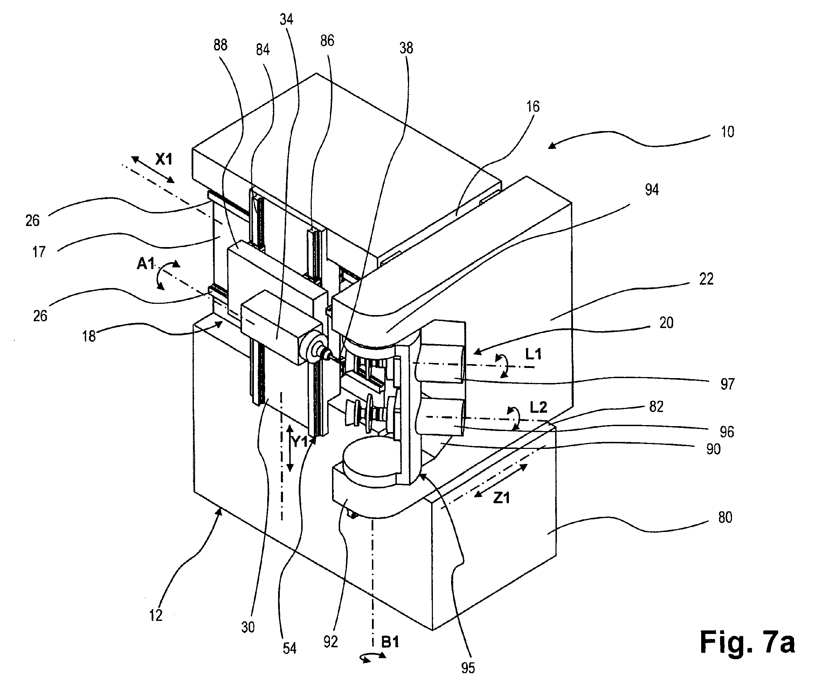

Figur 7a zeigt eine Ausführungsform der Erfindung. Zur Beschreibung werden für gleichartige oder gleichwirkende Komponenten dieselben Bezugszeichen verwendet, wie bei der Beschreibung der vorangehenden nicht erfindungsgemäßen Ausführungsformen gemäß den Figuren 1 bis 6.

Bei der Ausführungsform gemäß Figur 7a ist der Maschinenblock 12 wieder mit einem integral angeformten stufenartigen Vorsprung 80 versehen, wobei der Träger 22 sowohl an der vertikalen Funktionsfläche 16 als auch an der horizontalen Funktionsfläche 82 gelagert ist. Ferner erkennt man, dass der monolithische Maschinenblock 12 wieder mit der Ausnehmung 17 versehen ist, wobei die beiden Linearführungen 24 und 26 in dieser Ausnehmung 17 angeordnet sind. Bei dieser Ausführungsvariante ist jedoch der daran angebrachte Schlitten 30 an seiner Vorderseite mit zwei Linearführungen 84 und 86 versehen, die im Wesentlichen in vertikaler Richtung entlang der Achse Y1 verlaufen. Über diese beiden Linearführungen 84 und 86 ist ein weiterer Schlitten 88 in vertikaler Richtung relativ zum Maschinenblock 12 entlang der Achse Y1 geführt. Auf diesem weiteren Schlitten 88 ist die Werkstückträgeranordnung 18 mit ihrer rotatorisch antreibbaren Spindelanordnung 34 und dem letztlich daran angebrachten Werkstück 38 angeordnet.

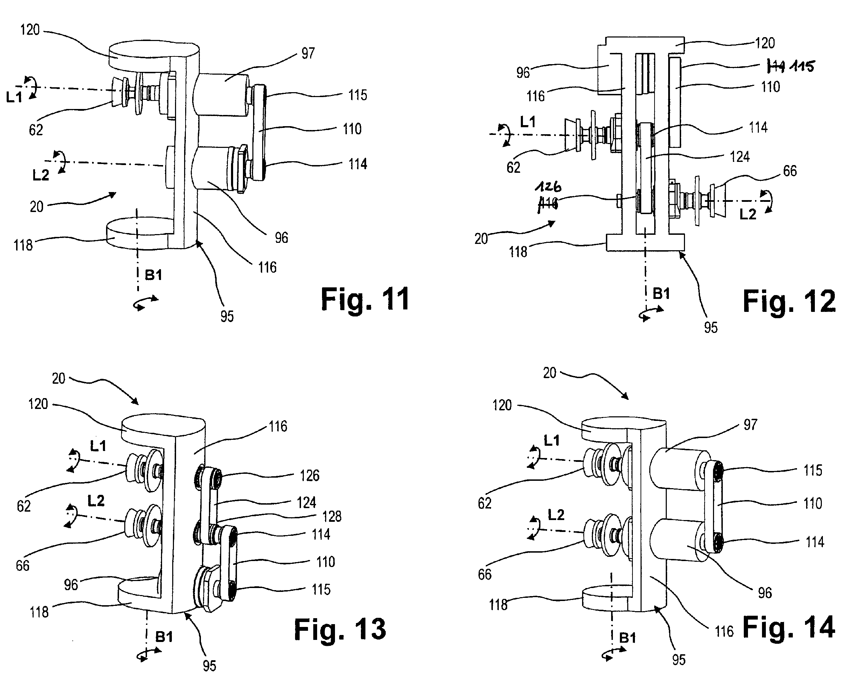

Ferner erkennt man in Figur 7a, dass der Träger 22 in seinem vorderen Bereich mit einer Ausnehmung 90 versehen ist und sich gabelartig um diese Ausnehmung 90 herum mit zwei Auslegern 92 und 94 erstreckt. Diese beiden Ausleger 92 und 94 bilden im Bereich ihres freien Endes jeweils eine Lagerstelle. Zwischen den beiden Auslegern 92, 94 ist die Bearbeitungseinheit 20 aufgenommen, und zwar in Form einer Schwinge 95, die um die im Wesentlichen horizontal verlaufende Schwenkachse B1 verschwenkbar ist. Die Bearbeitungseinheit 20 ist also in Form der Schwinge 95 am gabelförmigen Träger 22 gelagert. Sie umfasst im dargestellten Fall zwei Schleifscheiben 62 und 66, die über gesonderte Spindeln 96 und 97 jeweils separat und unabhängig voneinander antreibbar sind. Auf die Möglichkeiten zum Antrieb wird im Folgenden mit Bezug auf die Figuren 11 bis 14 eingegangen. Die Bearbeitungseinheit 20 lässt sich um die Schwenkachse B1 herum verschwenken und in beliebiger Winkelposition relativ zum Werkstück 38 positionieren. Die weitere Positionierung der Bearbeitungseinheit 20 relativ zum Werkstück 38 erfolgt über die entsprechende Linearführungen entlang der Raumachsen X1, Y1, Z1, wie eingezeichnet.

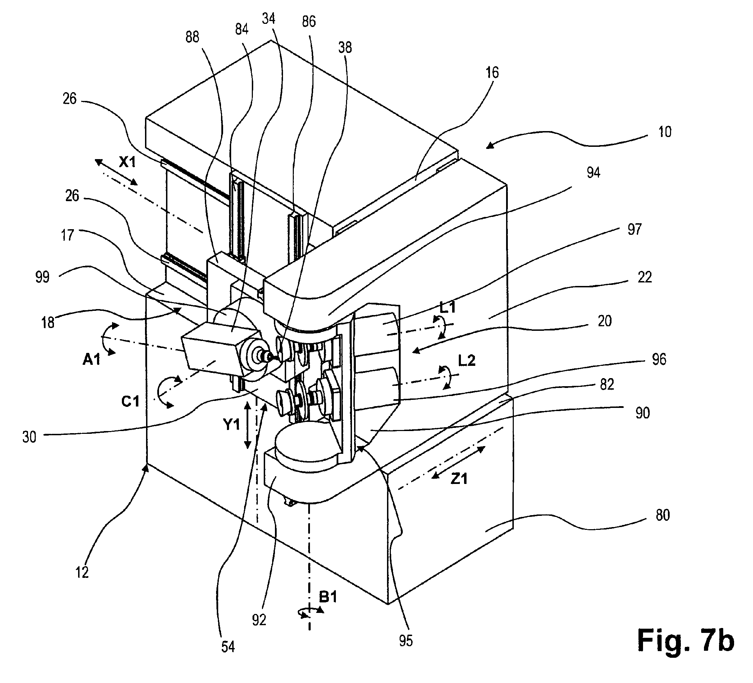

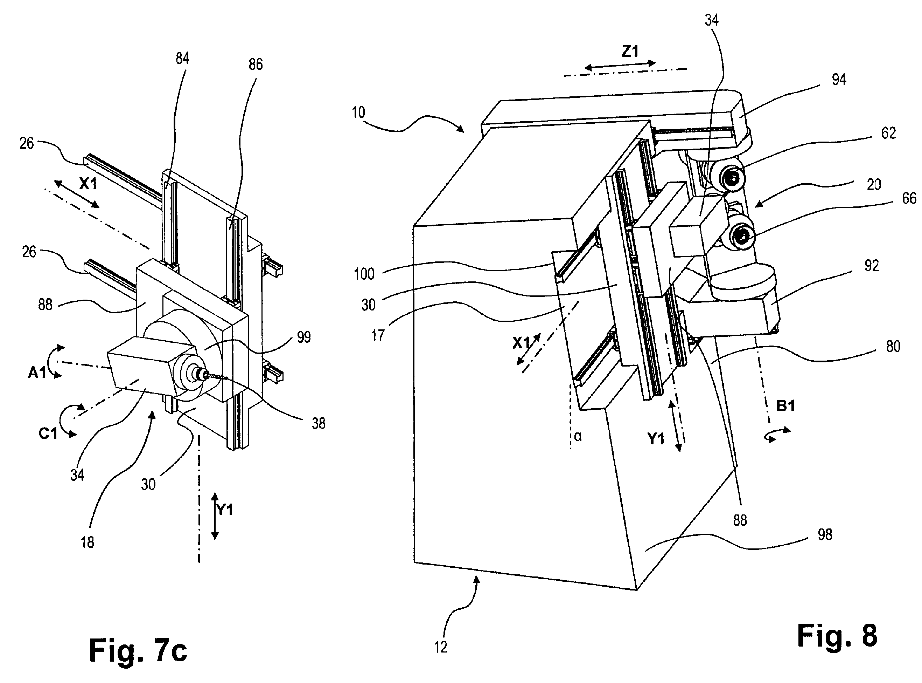

Figur 7b und 7c zeigen eine Abwandlung zu der Ausführungsform gemäß Figur 7a hinsichtlich der Führung der Werkstückträgeranordnung 18. Zusätzlich zu einer linearen Verlagerung über die beiden Führungen entlang den Achsen X1 und Y1 ist die Spindelanordnung 34 auf einem Schwenkteller 99 angeordnet, der relativ zu dem Schlitten 88 um die Schwenkachse C1 verschwenkbar ist. Ähnlich wie bei der Ausführungsform gemäß Figur 5 lässt sich bei dieser Ausführungsvariante die Spindelanordnung 34 mit dem daran angebrachten Werkstück 38 auch noch verschwenken.

Figur 8 zeigt eine weitere Ausführungsform der Erfindung. Zur Beschreibung werden für gleichartige oder gleichwirkende Komponenten dieselben Bezugszeichen verwendet, wie bei der Beschreibung der vorangehenden Ausführungsformen gemäß den Figuren 1 bis 7b.

Die Ausführungsform gemäß Figur 8 ist ähnlich der Ausführungsform gemäß Figur 7a ausgebildet. Allerdings ist der Maschinenblock 12 an seiner Vorderseite mit Schrägflächen 98, 100 ausgebildet, so dass er insgesamt die Form eines Keilstumpfs aufweist. Man erkennt auch, dass im Bereich der Ausnehmung 17 die Funktionsfläche 100 nicht vertikal verläuft sondern ebenfalls schräg. Der Neigungswinkel α der Funktionsflächen 98, 100 relativ zur Vertikalen beträgt etwa 10°.

Der weitere Aufbau der Ausführungsform gemäß Figur 8 gleicht - abgesehen von der Neigung der Funktionsflächen 98 und 100 - dem Aufbau gemäß der Ausführungsform nach Figur 7a. Wiederum ist die Bearbeitungseinheit 20 über die Schwinge 95 im Träger 22 gelagert und um die Schwenkachse B1 rotatorisch positionierbar.

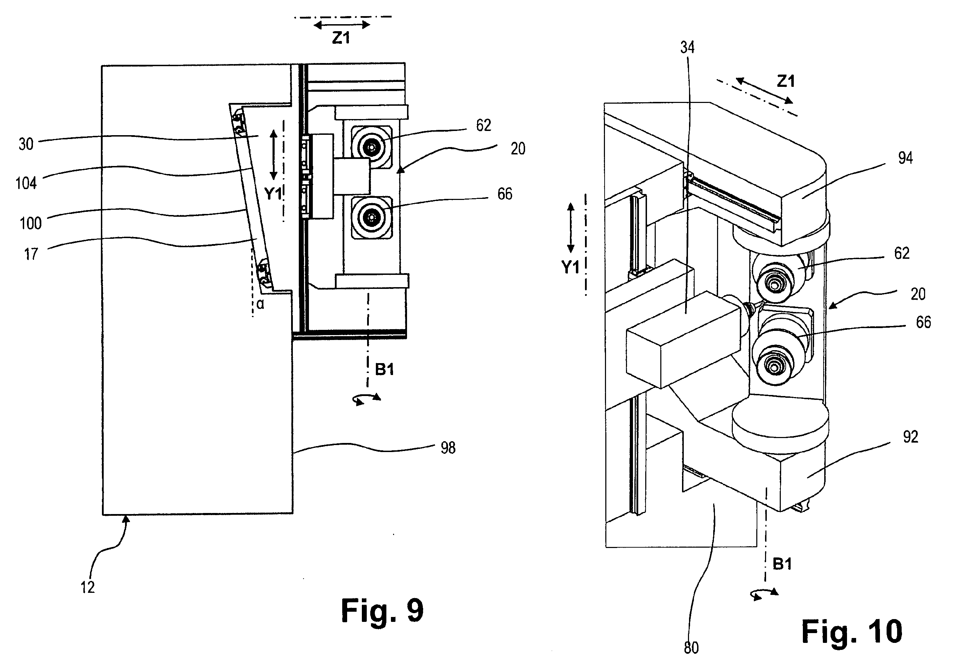

Ferner zeigen die Figuren 9 und 10 eine weitere Ausführungsform der Erfindung. Zur Beschreibung werden für gleichartige oder gleichwirkende Komponenten dieselben Bezugszeichen verwendet, wie bei der Beschreibung der vorangehenden Ausführungsformen gemäß den Figuren 1 bis 8.

Die Ausführungsform gemäß Figuren 9 und 10 ist ähnlich der Ausführungsform gemäß Figur 8 ausgebildet, wobei jedoch nur die zurückgesetzte Funktionsfläche 100 im Bereich der Ausnehmung 17 mit dem Neigungswinkel α schräg zur Vertikalen verläuft. Die frontseitige Funktionsfläche 98 des monolithischen Maschinenblocks 12 hingegen verläuft vertikal. Dementsprechend ist der Schlitten 30 in seinem in der Ausnehmung 17 aufgenommen Bereich keilförmig ausgebildet, so dass die Rückseite 104 des Schlittens 30 im Wesentlichen parallel zu der Funktionsfläche 100 verläuft und um den Neigungswinkel α von 10° geneigt ist.

Figuren 11 bis 14 zeigen verschiedene Ausführungsformen der Bearbeitungseinheit 20, wenn diese mit der Schwinge 95 ausgeführt ist. Besonderes Augenmerk ist dabei auf die Antriebsmöglichkeiten gerichtet. All diese Ausführungsformen lassen sich mit den erfindungsgemäßen Vorrichtungen gemäß den Figuren 7a, 7b, 8, 9 und 10 kombinieren.

Bei der Ausführungsform gemäß Figur 11 ist lediglich ein einziges Werkzeug 62 vorgesehen. Dieses wird über einen Motor 96 um die Achse L1 drehangetrieben, wozu ein Antriebsriemen 110 verwendet wird, der über zwei Riemenscheiben 112, 115 geführt ist. Man erkennt ferner, dass die Schwinge 95 eine Rückwand 116 und zwei Flügel 118, 120 aufweist.

Bei der Ausführungsform gemäß Figur 12 sind zwei rotatorisch angetriebene Werkzeuge 62, 66 vorgesehen, die entgegengesetzt zueinander ausgerichtet sind. Beide sind über im Wesentlichen parallele Drehachsen L1 und L2 drehbar. Als Antrieb dient ein einziger Motor 96, der im oberen Bereich der Rückwand 116 und des Flügels 120 angeordnet ist. Über eine erste Riemenscheibe 115 und einen Riemen 110 wird eine zweite Riemenscheibe 114 angetrieben, die drehfest mit dem Werkzeug 62 gekoppelt ist, so dass dieses rotatorisch um die Drehachse L1 angetrieben wird. Die Riemenscheibe 114 ist platzsparend in der Rückwand 116 der Schwinge 95 angeordnet, wozu die Rückwand 116 eine Aussparung 122 aufweist. In dieser Aussparung 122 ist ein weiterer Antriebsriemen 124 angeordnet, der eine weitere Riemenscheibe 126 umschlingt. Diese weitere Riemenscheibe 126 ist drehfest mit dem zweiten Werkzeug 66 gekoppelt und treibt dieses rotatorisch um die Achse L2 an.

Bei der Ausführungsform gemäß Figur 13 sind zwei gleichgerichtete Werkzeuge 62, 66 an der Schwinge 95 angebracht. Diese sind über den Motor 96 antreibbar, der im unteren Bereich der Rückwand 116 und des unteren Flügels 118 angeordnet ist. Seine Ausgangswelle ist mit der Riemenscheibe 115 versehen, die über den Antriebsriemen 110 mit der Riemenscheibe 114 gekoppelt ist. Letztere dient einerseits zum Antreiben des unteren Werkzeugs 66 um die Drehachse L2. Ferner ist mit dieser Riemenscheibe 114 auf einer gemeinsamen Welle eine weitere Riemenscheibe 128 drehfest gekoppelt, um die der Antriebsriemen 124 herumgeführt ist. Diese umschlingt auch die Riemenscheibe 126, die zum Antreiben des oberen Werkzeugs 62 um die Drehachse L1 drehfest mit diesem gekoppelt ist.

Ferner zeigt Figur 14 eine Ausführungsvariante, bei der die beiden Werkzeuge 62 und 66 wiederum gleichgerichtet mit ihren beiden Drehachse L1 und L2 angeordnet sind und über die beiden Riemenscheiben 114,115 und den Antriebsriemen 110 drehgekoppelt sind.

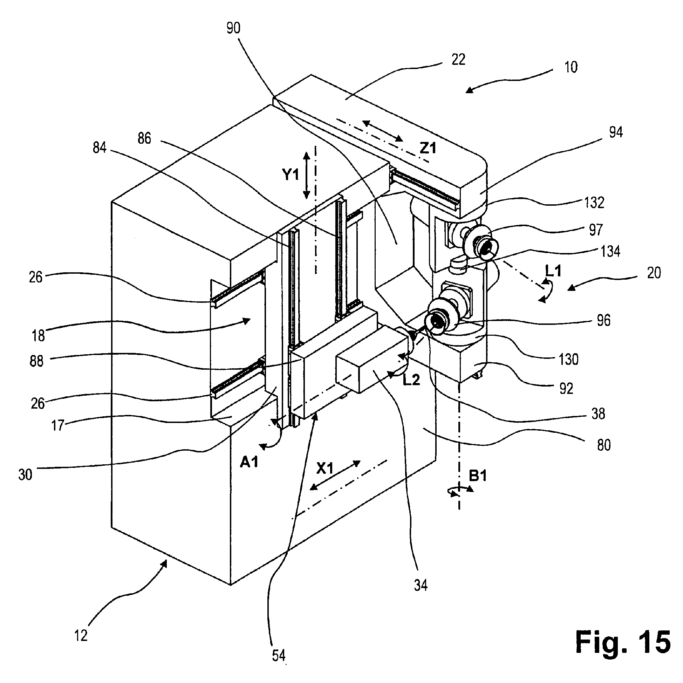

Schließlich zeigt Figur 15 eine weitere Ausführungsform der Erfindung. Zur Beschreibung werden für gleichartige oder gleichwirkende Komponenten dieselben Bezugszeichen verwendet, wie bei der Beschreibung der vorangehenden Ausführungsformen.

Die Ausführungsform gemäß Figur 15 ist ähnlich der Ausführungsform gemäß Figur 7a ausgebildet. Der wesentliche Unterschied zu der Ausführungsform gemäß Figur 7a besteht darin, dass die Ausführungsform gemäß Figur 15 nicht mit einer einzigen Schwinge 95 versehen ist, sondern dass am Träger 22 zwischen den beiden Auslegern 92, 94 zwei Schwingen vorgesehen sind, die mit dem Bezugszeichen 130, 132 bezeichnet sind. Diese beiden Schwingen 130, 132 sind jeweils drehbar um die Rotationsachse B1 in den beiden Auslegern 92, 94 gelagert. Die Besonderheit dieser Ausführungsform besteht darin, dass die beiden Schwingen 130, 132 über ein Schwenklager 134 relativ zueinander gelagert und auch relativ zueinander um die Rotationsachse B1 verschwenkbar sind, so dass sich die beiden Bearbeitungsdrehachsen L1 und L2 unabhängig voneinander positionieren und entweder in eine parallele oder in eine windschiefe Ausrichtung zueinander bringen lassen, wie etwa in Figur 15 gezeigt. Dadurch ist eine Bearbeitung möglich, wie sie in der Situation gemäß Figur 7a gezeigt ist, das heißt mit paralleler Ausrichtung der beiden Achsen L1 und L2, oder eine anderweitige Bearbeitung mit windschiefer Ausrichtung, wie in Figur 15 gezeigt. Zur Positionierung und zur Bearbeitung lassen sich die beiden Schwingen 130, 132 und der Spindeln 96, 97 unabhängig voneinander numerisch ansteuern.

Die erfindungsgemäße Vorrichtung bietet mit ihren vielfältigen Ausführungsformen den Vorteil eines kompakten Aufbaus, weil sämtliche Funktionskomponenten in räumlicher Nähe an einem einzigen massiv und kompakt ausgebildeten monolithischen Maschinenblock 12 angeordnet sind. Komplexe Strukturen, wie sie beim Stand der Technik zum Einsatz kommen, können somit vermieden werden. Der monolithische Maschinenblock 12 erlaubt eine mechanisch vorteilhafte Abstützung der einzelnen verlagerbaren Maschinenkomponenten sowie eine günstige Einleitung von Lagerkräften.

Die modulare Bauweise der erfindungsgemäßen Vorrichtungen erlaubt eine Anpassung an jeweils gewünschte Bearbeitungssituationen, wie die verschiedenen Ausführungsformen zeigen.

Der erfindungsgemäße Aufbau bietet darüber hinaus den Vorteil, dass sowohl die Werkstückträgeranordnung als auch die Bearbeitungseinheit relativ gut zugänglich sind, was Vorteile hinsichtlich der Automatisierung von Bearbeitungsvorgängen bietet. Aufgrund der guten Zugänglichkeit dieser beiden Komponenten ist es möglich, automatisiert über einen Roboterarm oder einen andersartig ausgebildeten Werkstückwechsler Werkstücke nach der Bearbeitung schnell und zuverlässig auszutauschen. Gleiches gilt für den Austausch von Werkzeugen, die über einen geeigneten Roboter oder einen andersartigen Werkzeugwechsler unter Einbindung eines Magazins ausgetauscht werden können.

## Patentansprüche

1. Vorrichtung (10) zum Schärfen von Werkzeugen mit Schneiden für die spanabhebende Bearbeitung, wie beispielsweise Bohrer, Fräser oder dergleichen, wobei die Vorrichtung (10) umfasst:
- einen monolithischen Maschinenblock (12) mit wenigstens zwei im Winkel zueinander angeordneten Funktionsflächen (14,16),
- eine Werkstückträgeranordnung (18) zum Einspannen eines zu bearbeitenden Werkstücks (38),
- eine Bearbeitungseinheit (20), an der wenigstens ein Werkzeug (62, 68, 70) zum Bearbeiten des Werkstücks (38) anbringbar ist, und
- einen Träger (22), an dem die Bearbeitungseinheit (20) verlagerbar angebracht ist,
wobei der Maschinenblock (12) an einer ersten Funktionsfläche (14) der beiden Funktionsflächen (14, 16) des Maschinenblocks (12) wenigstens eine erste Linearführung (26) zum Führen der Werkstückträgeranordnung (18) entlang wenigstens einer ersten Führungsachse (X1) und an der zweiten Funktionsfläche (16) der beiden Funktionsflächen (14, 16) des Maschinenblocks (12) wenigstens eine zweite Linearführung zum Führen des Trägers (22) für die Bearbeitungseinheit (20) entlang wenigstens einer zweiten Führungsachse (Z1) aufweist,
wobei die Bearbeitungseinheit (20) relativ zum Träger (22) verlagerbar ist,
wobei die Werkstückträgeranordnung (18) mit einer ersten Rotationsachse Drehen des Werkstücks (38) ausgebildet ist,
wobei die erste Führungsachse (X1) und die zweite Führungsachse (Z1) horizontal angeordnet sind wobei der Träger (22) wenigstens eine Gabel (92, 94) zur Aufnahme wenigstens einer Schwinge (95) aufweist, an der die Bearbeitungseinheit (20) zumindest um eine zweite Rotationsachse (B1) verschwenkbar gelagert ist,
dass ersten Funktionsfläche (14) wenigstens eine dritte Linearführung (84, 86) zum Führen der Werkstückträgeranordnung (18) entlang einer dritten Führungsachse (Y1) zugeordnet ist, wobei die beiden Funktionsflächen (14, 16) des Maschinenblocks (12) im Wesentlichen senkrecht zueinander angeordnet sind,
wobei die erste Führungsachse (X1), die zweite Führungsachse (Y1) und die dritte Führungsachse (Z1) ein Koordinatensystem aus nicht parallelen, zueinander orthogonalen Achsen aufspannen,
wobei die dritte Führungsachse (Y1) vertikal verläuft,
**dadurch gekennzeichnet**, wobei die Bearbeitungseinheit (20) an der Schwinge (95) wenigstens eine rotatorisch angetriebene Spindel (96, 97) zum Antreiben verschiedener Werkzeuger (62,66,68,70) aufweist,
wobei der Maschinenblock (12) wenigstens einen Vorsprung (80) mit einer horizontalen Fläche (82) oder einer zur Horizontalen geneigten Fläche aufweist, wobei die zweite Linearführung zum Führen des Trägers (22) teilweise im Bereich dieses Vorsprungs (80) auf dieser Fläche angeordnet ist.

2. Vorrichtung (10) nach Anspruch 1,
**dadurch gekennzeichnet, dass** wenigstens eine der beiden Funktionsflächen (14,16, 100) des Maschinenblocks (12) zur Vertikalen geneigt ist, vorzugsweise in einem Winkel von wenigstens 10°.

3. Vorrichtung (10) nach einem der vorangehenden Ansprüche,
**dadurch gekennzeichnet, dass** die erste Linearführung (26) der Werkstückträgeranordnung (18) im Wesentlichen über die gesamte Länge der ersten Funktionsfläche (14) des Maschinenblocks (12) ausgebildet ist

4. Vorrichtung (10) nach einem der vorangehenden Ansprüche,
**dadurch gekennzeichnet, dass** die Werkstückträgeranordnung (18) an einem entlang der ersten Linearführung (26) geführten ersten Schlitten (30) angebracht ist.

5. Vorrichtung (10) nach Anspruch 4,
**dadurch gekennzeichnet, dass** an dem ersten Schlitten (30) die dritte Linearführung (84, 86) zum Führen der Werkstückträgeranordnung (18) entlang der dritten Führungsachse (Y1) angeordnet ist.

6. Vorrichtung (10) nach einem der vorangehenden Ansprüche,
**dadurch gekennzeichnet, dass** die erste und zweite Rotationsachse (A1, B1) zueinander im Wesentlichen parallel oder orthogonal verlaufen.

7. Vorrichtung (10) nach einem der vorangehenden Ansprüche,
**dadurch gekennzeichnet, dass** die Werkstückträgeranordnung (18) relativ zum ersten Schlitten (30) um eine dritte Rotationsachse (C1) verschwenkbar ist.

8. Vorrichtung (10) nach Anspruch 7,
**dadurch gekennzeichnet, dass** die Werkstückträgeranordnung (18) an einem Schwenkarm (32) oder Schwenkteller (99) angebracht ist, der relativ zum ersten Schlitten (30) um die dritte Rotationsachse (C1) verschwenkbar ist.

9. Vorrichtung (10) nach einem der vorangehenden Ansprüche,
**dadurch gekennzeichnet, dass** an der Gabel (92, 94) eine Mehrzahl von Schwingen (130, 132) relativ zueinander und relativ zur Gabel um die zweite Rotationsachse (B1) verschwenkbar gelagert ist, wobei zwei zueinander benachbarte Schwingen (130, 132) vorzugsweise über einen Gelenkabschnitt (134) relativ zueinander gelagert sind.

10. Vorrichtung (10) nach einem der vorangehenden Ansprüche,
**dadurch gekennzeichnet, dass** die Werkstückträgeranordnung (18) eine erste Rotationsspindel (34) aufweist, mit der das Werkstück (38) um eine Werkstücklängsachse (A1) drehbar ist.

11. Vorrichtung (10) nach einem der vorangehenden Ansprüche,
**dadurch gekennzeichnet, dass** die Bearbeitungseinheit (20) wenigstens eine Schleifscheibe (62, 66) oder/und wenigstens ein Erodierwerkzeug (68), vorzugsweise eine Erodierscheibe, oder/und wenigstens einen Laserkopf oder/und wenigstens einen Messtaster (64) aufweist.

12. Vorrichtung (10) nach einem der vorangehenden Ansprüche,
**dadurch gekennzeichnet, dass** wenigstens eine der Funktionsflächen (100) in einer im Maschinenblock (12) vorgesehenen Ausnehmung (17) oder an einem am Maschinenblock (12) vorgesehenen Vorsprung angeordnet ist.

## Claims

1. A device (10) for sharpening tools with cutters for cutting, such as for example drills, milling tools or the like, the device (10) comprising:
- a monolithic machine block (12) with at least two functional surfaces (14, 16) arranged at an angle with respect to one another,
- a workpiece support arrangement (18) for clamping a workpiece (38) to be machined,
- a machining unit (20) to which at least one tool (62, 66, 68, 70) can be attached for machining the workpiece (38), and
- a support (22), to which the machining unit (20) can be displaceably attached,
wherein, on a first functional surface (14) of the two functional surfaces (14, 16) of the machine block (12), the machine block (12) has at least one first linear guide (26) for guiding the workpiece support arrangement (18) along at least one first guide axis (X1) and, on the second functional surface (16) of the two functional surfaces (14, 16) of the machine block (12), the machine block (12) has at least one second linear guide for guiding the support (22) for the machining unit (20) along at least one second guide axis (Z1),
wherein the machining unit (20) is displaceable relative to the support (22), wherein the workpiece support arrangement (18) is constructed with a first axis of rotation (A1) for rotating the workpiece (38), wherein the first guide axis (X1) and the second guide axis (Y1) are arranged horizontally, wherein the support (22) has at least one fork (92, 94) for receiving at least one rocker (95) on which the machining unit (20) is mounted such that it is pivotable at least about a second axis of rotation (B1),
**characterized in that**
the first functional surface (14) is allocated at least one third linear guide (84, 86) for guiding the workpiece support arrangement (18) along a third guide axis (Y1), wherein the two functional surfaces (14, 16) of the machine block (12) are arranged substantially perpendicular to one another, wherein the first guide axis (X1), the second guide axis (Y1) and the third guide axis (Z1) span a coordinate system of non-parallel, mutually orthogonal axes, wherein the third guide axis (X1) extends vertically,
wherein the machining unit (20) on the rocker (95) has at least one rotationally driven spindle (96, 97) for driving different tools (62, 66, 68, 70), and wherein the machine block (12) has at least one projection (80) with a horizontal surface (82) or a surface inclined to the horizontal, wherein the second linear guide for guiding the support (22) is arranged partially in the region of this projection (80) on this surface.

2. A device (10) according to Claim 1,
**characterized in that** at least one of the two functional surfaces (14, 16, 100) of the machine block (12) is inclined with respect to the vertical, preferably at an angle of at least 10°.

3. A device (10) according to one of the preceding claims,
**characterized in that** the first linear guide (26) of the workpiece support arrangement (18) is formed to extend substantially over the entire length of the first functional surface (14) of the machine block (12).

4. A device (10) according to one of the preceding claims,
**characterized in that** the workpiece support arrangement (18) is attached to a first slide (30) guided along the first linear guide (26).

5. A device (10) according to Claim 4,
**characterized in that** on the first slide (30), the third linear guide (84, 86) is arranged for guiding the workpiece support arrangement (18) along the third guide axis (Y1).

6. A device (10) according to one of the preceding claims,
**characterized in that** the first and second axis of rotation (A1, B1) extend substantially parallel or orthogonally to one another.

7. A device (10) according to one of the preceding claims,
**characterized in that in that** the workpiece support arrangement (18) is pivotable about a third axis of rotation (C1) relative to the first slide (30).

8. A device (10) according to Claim 7,
**characterized in that** the workpiece support arrangement (18) is attached to a pivot arm (32) or pivot plate (99) which is pivotable about the third axis of rotation (C1) relative to the first slide (30).

9. A device (10) according to one of the preceding claims,
**characterized in that** on the fork (92, 94), a plurality of rockers (130, 132) are mounted such that they are pivotable relative to one another and relative to the fork about the second axis of rotation (B1), wherein two mutually adjacent rockers (130, 132) are preferably mounted relative to one another by way of a joint portion (134).

10. A device (10) according to one of the preceding claims,
**characterized in that** the workpiece support arrangement (18) has a first rotational spindle (34) with which the workpiece (38) is rotatable about a workpiece longitudinal axis (A1).

11. A device (10) according to one of the preceding claims,
**characterized in that** the machining unit (20) has at least one grinding disc (62, 66) and/or at least one eroding tool (68), preferably an eroding disc, and/or at least one laser head and/or at least one measuring sensor (64).

12. A device (10) according to one of the preceding claims,
**characterized in that** at least one of the functional surfaces (100) is arranged in a recess (17) provided in the machine block (12) or on a projection arranged on the machine block (12).

## Revendications

1. Dispositif (10) pour aiguiser des outils à taillants pour l'usinage par enlèvement de copeaux, tels que, par exemple, forets, fraises ou similaire, ce dispositif (10) comprenant :
- un bloc machine (12) monolithique comportant au moins deux surfaces fonctionnelles (14, 16) formant un angle l'une par rapport à l'autre,
- un dispositif de support de pièce (18) pour enserrer une pièce à usiner (38)
- une unité d'usinage (20) sur laquelle peut être monté au moins un outil (62, 66, 68, 70) pour usiner ladite pièce (38) et
- un support (22) sur lequel l'unité d'usinage (20) est montée de manière déplaçable,
le bloc machine (12) présentant sur une première surface fonctionnelle (14) des deux surfaces fonctionnelles (14, 16) du bloc machine (12) au moins une première coulisse linéaire (26) prévue pour guider le dispositif de support de pièce (18) le long d'au moins un premier axe de guidage (X1), et sur la deuxième surface fonctionnelle (16) des deux surfaces fonctionnelles (14, 16) du bloc machine (12), au moins une deuxième coulisse linéaire prévue pour guider le support (22) de l'unité d'usinage (20) le long d'au moins un deuxième axe de guidage (Z1),
l'unité d'usinage (20) pouvant être déplacée par rapport au support (22),
le dispositif de support de pièce (18) étant réalisé avec un premier axe de rotation (A1) pour faire tourner la pièce à usiner (38),
le premier axe de guidage (X1) et le deuxième axe de guidage (Z1) étant disposés horizontalement,
le support (22) présentant au moins une fourchette (92, 94) destinée à recevoir au moins un bras oscillant (95) sur lequel l'unité d'usinage (20) est montée de manière pivotante au moins autour d'un deuxième axe de rotation (B1),
**caractérisé en ce que**
au moins une troisième coulisse linéaire (84, 86) est associée à la première surface fonctionnelle (14) pour guider le dispositif de support de pièce (18) le long d'un troisième axe de guidage (Y1),
les deux surfaces fonctionnelles (14, 16) du bloc machine (12) étant disposées sensiblement perpendiculaires l'une par rapport à l'autre,
le premier axe de guidage (X1), le deuxième axe de guidage (Z1) et le troisième axe de guidage (Y1) configurant un système de coordonnées constitué d'axes non parallèles et orthogonaux les uns par rapport aux autres,
le troisième axe de guidage (Y1) s'étendant verticalement, l'unité d'usinage (20) présentant sur le bras oscillant au moins une broche (96, 97) entraînée en rotation pour entraîner différents outils (62, 66, 68, 70),
le bloc machine (12) présentant au moins une saillie (80) pourvue d'une surface (82) horizontale ou d'une surface inclinée par rapport à l'horizontale, la deuxième coulisse linéaire prévue pour guider le support (22) étant partiellement disposée sur cette surface dans la zone de ladite saillie (80).

2. Dispositif (10) selon la revendication 1,
**caractérisé en ce qu'**au moins une des deux surfaces fonctionnelles (14, 16) du bloc machine (12) est inclinée par rapport à la verticale, de préférence selon un angle d'au moins 10°.

3. Dispositif (10) selon l'une des revendications précédentes,
**caractérisé en ce que** la première coulisse linéaire (26) est réalisée pour l'essentiel sur toute la longueur de la première surface fonctionnelle (14) du bloc machine (12).

4. Dispositif (10) selon l'une des revendications précédentes,
**caractérisé en ce que** le dispositif de support de pièce (18) est disposé sur un premier chariot (30) guidé le long de la première coulisse linéaire (26).

5. Dispositif (10) selon la revendication 4,
**caractérisé en ce que** la troisième coulisse linéaire (84, 86) est disposée sur le premier chariot (30) pour guider le dispositif de support de pièce (18) le long du troisième axe de guidage (Y1).

6. Dispositif (10) selon l'une des revendications précédentes,
**caractérisé en ce que** le premier et le deuxième axe de rotation (A1, B1) s'étendent sensiblement parallèlement ou orthogonalement l'un par rapport à l'autre.

7. Dispositif (10) selon l'une des revendications précédentes,
**caractérisé en ce que** le dispositif de support de pièce (18) peut pivoter autour d'un troisième axe de rotation (C1), par rapport au premier chariot (30).

8. Dispositif (10) selon la revendication 7,
**caractérisé en ce que** le dispositif de support de pièce (18) est monté sur un bras pivotant (32) ou sur un plateau pivotant (99) qui peut pivoter autour du troisième axe de rotation (C1), par rapport au premier chariot (30).

9. Dispositif (10) selon l'une des revendications précédentes,
**caractérisé en ce que** plusieurs bras oscillants (130, 132) sont montés sur la fourchette (92, 97) de manière pivotante les uns par rapport aux autres, et par rapport à la fourchette, autour du deuxième axe de rotation (B1), deux bras oscillants (130, 132) adjacents étant de préférence montés l'un par rapport à l'autre à l'aide d'un segment articulé.

10. Dispositif (10) selon l'une des revendications précédentes,
**caractérisé en ce que** le dispositif de support de pièce (18) présente une première broche de rotation (34) au moyen de laquelle la pièce à usiner (38) peut être mise en rotation autour d'un axe longitudinal de pièce (A1).

11. Dispositif (10) selon l'une des revendications précédentes,
**caractérisé en ce que** l'unité d'usinage (20) présente au moins un disque abrasif (62, 66) ou/et au moins un outil à érosion (68), de préférence un disque d'érosion, ou/et une tête laser ou/et au moins un palpeur de mesure (64).

12. Dispositif (10) selon l'une des revendications précédentes,
**caractérisé en ce qu'**au moins une des surfaces fonctionnelles (100) est disposée dans un évidement (17) prévu dans le bloc machine (12) ou sur une saillie prévue sur le bloc machine (12).
